(19) Europäisches Patentamt / European Patent Office / Office européen des brevets

(11) **EP 4 162 375 B1**

(12) **FASCICULE DE BREVET EUROPEEN**

(45) Date de publication et mention de la délivrance du brevet:
**12.11.2025 Bulletin 2025/46**

(21) Numéro de dépôt: **21734405.0**

(22) Date de dépôt: **27.05.2021**

(51) Classification Internationale des Brevets (IPC):
**G06F 21/10** (2013.01)   **G06Q 20/36** (2012.01)
**G06F 21/34** (2013.01)   **G06F 21/64** (2013.01)
**G06Q 20/40** (2012.01)   **G06Q 50/18** (2012.01)
**G06T 1/00** (2006.01)   **G06Q 50/26** (2024.01)

(52) Classification Coopérative des Brevets (CPC):
**G06F 21/1063; G06F 21/34; G06F 21/645; G06Q 20/3674; G06Q 20/4014; G06Q 20/40145; G06Q 50/18; G06Q 50/265; G06T 1/005;** G06T 2201/0065

(86) Numéro de dépôt international:
**PCT/FR2021/050962**

(87) Numéro de publication internationale:
**WO 2021/245341 (09.12.2021 Gazette 2021/49)**

(54) **PROCÉDÉ DE SÉCURISATION D'UNE IMAGE D'AUTHENTIFICATION D'UN DOCUMENT DE SÉCURITÉ EN UTILISANT LES IMAGES ANTAGONISTES**

VERFAHREN ZUM SICHERN EINES AUTHENTIFIZIERUNGSBILDS EINES SICHERHEITSDOKUMENTS DUCH BENUTZEN VON KONTRADIKTORISCHEN BILDER

METHOD OF SECUZRING AN AUTHENTICATION PICTURE OF A SECURITY DOCUMENT BY USING ADVERSIAL IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2020 FR 2005804**

(43) Date de publication de la demande:
**12.04.2023 Bulletin 2023/15**

(73) Titulaire: **IDEMIA Identity & Security France 92400 Courbevoie (FR)**

(72) Inventeur: **LOSTANLEN, Mateo 92400 COURBEVOIE (FR)**

(74) Mandataire: **Santarelli (Société Ipside) Tour Trinity 1 bis Esplanade de la Défense 92035 Paris La Défense Cedex (FR)**

(56) Documents cités:
• **KHARITTHA THONGKOR ET AL: "Digital image watermarking for photo authentication in Thai national ID card", ELECTRICAL ENGINEERING/ ELECTRONICS, COMPUTER, TELECOMMUNICATIONS AND INFORMATION TECHNOLOGY (ECTI-CON), 2012 9TH INTERNATIONAL CONFERENCE ON, IEEE, 16 May 2012 (2012-05-16), pages 1 - 4, XP032213876, ISBN: 978-1-4673-2026-9, DOI: 10.1109/ ECTICON.2012.6254245**
• **SALAH GHAMIZI ET AL: "Adversarial Embedding: A robust and elusive Steganography and Watermarking technique", ARXIV.ORG, CORNELL UNIVERSITY LIBRARY, 201 OLIN LIBRARY CORNELL UNIVERSITY ITHACA, NY 14853, 14 November 2019 (2019-11-14), XP081543570**

**Description**

Domaine Technique

L'invention concerne les documents de sécurité et les procédés pour sécuriser de tels documents de sécurité. En particulier, l'invention concerne les documents de sécurité sur lesquels une image du porteur du document est stockée.

Technique antérieure

Les documents de sécurité peuvent être des passeports, des visas de séjour, etc. Souvent, une photographie du porteur du document est soit imprimée sur le document soit stockée dans une mémoire d'un composant électronique du document. Ainsi, les documents de sécurité visés dans la présente description peuvent être des documents identitaires associés à un porteur.

Les documents de sécurité font régulièrement l'objet de tentatives de falsification et de contrefaçon. Comme on le conçoit, un faussaire devra remplacer l'image enregistrée ou imprimée s'il souhaite fabriquer un document falsifié, pour reprendre l'apparence d'un nouveau porteur non autorisé.

Il est donc nécessaire d'utiliser des dispositifs de sécurité qui indiquent qu'une image qui est enregistrée ou imprimée sur un document de sécurité est bien celle que l'autorité qui a délivré ce document de sécurité a enregistré ou imprimé sur ce document de sécurité.

De l'état de la technique antérieure, on connait le document FR3035253 qui propose de vérifier une signature particulière sur l'image de l'image, par exemple une signature spectrale), pour authentifier l'image.

On connait également des méthodes de tatouage numérique (« watermarking » en anglais) dans lesquelles une information est cachée (par exemple invisible pour un utilisateur) dans un fichier, un signal, ou une image. Ces méthodes rentrent dans le cadre de la stéganographie. Ces méthodes peuvent être utilisées pour empêcher le remplacement d'une image par un faussaire.

Il est nécessaire d'utiliser des méthodes de tatouage numérique que seule l'autorité qui délivre les documents peut maitriser. Pour cela, les méthodes de tatouage numériques doivent être les plus invisibles possibles de sorte qu'il n'est pas possible pour un faussaire de déterminer la modification qui a été appliquée à une image.

La présente invention répond à ce besoin.

KHARITTHA THONGKOR ET AL: "Digital image watermarking for photo authentication in Thai national ID card", ELECTRICAL ENGINEERING/ ELECTRONICS, COMPUTER, TELECOMMUNICATIONS AND INFORMATION TECHNOLOGY (ECTI-CON), 2012 9TH INTERNATIONAL CONFERENCE ON, IEEE, 16 mai 2012 (2012-05-16), pages 1-4, XP032213876, DOI: 10.1109/ ECTICON.2012.6254245, ISBN: 978-1-4673-2026-9 divulgue le tatouage d' une image à enregistrer dans un document de sécurité, un visage du porteur du document de sécurité étant représenté sur l'image.

SALAH GHAMIZI ET AL: "Adversarial Embedding: A robust and elusive Steganography and Watermarking technique", ARXIV.ORG, CORNELL UNIVERSITY LIBRARY, 201 OLIN LIBRARY CORNELL UNIVERSITY ITHACA, NY 14853, 14 novembre 2019 (2019-11-14), XP081543570, divulgue la réalisation d'un tatouage sécurisé d'une image moyennant la détermination d'images antagonistes de l'image par rapport à des réseaux de neurones artificiels pour détecter respectivement des classes correspondant à des codage du message à tatouer.

Exposé de l'invention

A cet effet, l'invention propose un procédé de sécurisation d'une image à enregistrer dans un document de sécurité, un visage du porteur du document de sécurité étant représenté sur l'image, le procédé comprenant:

une détermination d'une image antagoniste de l'image par rapport à un réseau de neurones artificiels adapté à subir un apprentissage automatique pour détecter la présence d'un visage sur des images et par rapport à la classe visage, un transfert de l'image antagoniste sur le document de sécurité de sorte que l'image antagoniste soit stockée sur le document de sécurité.

L'image à sécuriser peut être une portion d'une autre image.

Les images antagonistes (« adversarial images » en anglais) sont des images qui sont conçues pour tromper un réseau de neurones artificiels.

L'homme du métier sait obtenir de telles images par rapport à un réseau de neurones artificiels donné. Par exemple, le document « Adversarial examples in the physical world » (Alexey Kurakin, Ian Goodfellow, Samy Bengio, arXiv:1607.02533, accessible en mai 2020 à l'URL https://arxiv.org/pdf/1607.02533.pdf) décrit des méthodes pour obtenir des images antagonistes pour un modèle donné. Tel est également le cas du document « Adversarial Machine Learning at Scale » (Alexey Kurakin, Ian Goodfellow, Samy Bengio, arXiv:1611.01236, accessible en mai 2020 à l'URL https://arxiv.

org/pdf/1611.01236.pdf). Par exemple, pour une image représentant un objet O ayant une type ou une classe C, un réseau de neurones artificiel entrainé pour détecter les objets de la classe C délivrera un résultat qui indique l'absence (par exemple un score faible) d'objets de classe C si on lui fournit l'image antagoniste de l'image I par rapport à ce réseau de neurones artificiels.

Dans l'art antérieur, ces images sont considérées comme pouvant être utilisées à des fins frauduleuses. Par exemple, la détermination d'une image antagoniste d'une plaque d'immatriculation peut tromper un réseau de neurones artificiels destiné à lire les plaques d'immatriculation. Ici, au contraire, c'est à des fins d'authentification qu'on utilise une image antagoniste. En effet, celle-ci peut avoir un aspect visuel proche de l'originale mais possède une propriété particulière qui fait que lorsqu'elle est traitée par le réseau de neurones artificiels auquel elle est associée, un résultat inattendu apparait. L'erreur à la sortie du réseau de neurones artificiels de l'art antérieur est ici utilisée comme un moyen d'ajouter un tatouage numérique. Ainsi, l'image est sécurisée en devenant une image antagoniste.

Le réseau de neurones artificiels peut être un réseau de neurones convolutifs (plus connu sous l'acronyme anglo-saxon « CNN : Convolutional Neural Network »). Ici, ce réseau est adapté pour subir (« adapted to undergo » en anglais) un apprentissage automatique (« machine learning » en anglais) pour la détection de la présence d'un visage sur des images. Cela signifie que ce réseau est différentiable, par exemple pour permettre l'utilisation de la méthode du gradient descendant. En outre, ce réseau comporte assez de nœuds en entrée pour recevoir des images (par exemple des matrices de pixels, chaque pixel pouvant être associé à trois valeurs pour les couleurs Rouge-Vert-Bleu, par exemple trois valeurs comprises entre 0 et 255), et au moins une sortie, par exemple un score qui indique une probabilité liée à la présence d'un visage sur l'image (typiquement une valeur comprise entre 0 et 1, 0 correspondant à l'absence d'un visage et 1 à la présence d'un visage). Le réseau de neurones artificiels peut en outre comporter une ou plusieurs autres sorties chacune associées à une classe.

Ici, le réseau de neurones artificiels peut avoir été entrainé pour la détection de visages (humains). En d'autres termes, lorsqu'un visage humain est visible sur une image traité par le réseau de neurones, il délivre un score élevé pour la classe visage (par exemple supérieur à un seuil donné). L'homme du métier saura entrainer le réseau de neurones artificiels pour qu'il soit entrainé pour la détection de visages.

Par exemple, le réseau de neurones artificiels peut être entrainé avec l'ensemble d'images connu sous le nom « Open Images » et décrit notamment dans le document « The Open Images Dataset V4: Unified image classification, object detection, and visual relationship detection at scale » (Alina Kuznetsova, Hassan Rom, Neil Alldrin, Jasper Uijlings, Ivan Krasin, Jordi Pont-Tuset, Shahab Kamali, Stefan Popov, Matteo Malloci, Alexander Kolesnikov, Tom Duerig, Vittorio Ferrari, arXiv:1811.00982v2, disponible en mai 2020 à l'URL https://arxiv.org/pdf/1811.00982.pdf). L'ensemble d'images « Open Images » est annoté avec notamment la classe « human faces », ce qui permet de mettre en œuvre un entraînement en utilisant la méthode du gradient descendant. On pourra également utiliser des images d'une autre classe pour entrainer le réseau de neurones artificiels à faire la différence entre les visages et cette autre classe.

On notera qu'un réseau de neurones artificiels qui peut être entrainé pour la détection de la présence d'un visage sur une image va délivrer un score de prédiction de la présence d'un visage, qui peut être compris entre 0 et 1. Ce réseau de neurones artificiels peut également (mais non obligatoirement) être entrainé pour la détection de la présence d'autres classes d'objets sur les images. Le traitement d'une image antagoniste de visage par ce réseaux de neurones artificiels va délivrer :

- pour la détection de la présence d'un visage un score de prédiction inférieur à un seuil donné (par exemple 0,5), et/ou
- pour la détection de la présence d'un autre objet un score de prédiction supérieur à celui de la détection de la présence d'un visage, voire même également supérieur à un autre seuil donné.

Enfin, on peut noter qu'une image antagoniste obtenue par les méthodes décrites dans le document précité sera l'image avec une modification minimale qui permet de tromper le réseau de neurones artificiels.

Selon un mode de mise en œuvre particulier, la détermination de l'image antagoniste comporte une application d'un décalage à chaque valeur de chaque pixel de l'image d'une quantité donnée, le décalage favorisant la baisse d'un score de prédiction par le réseau de neurones artificiels de la présence d'un visage sur l'image, ou l'augmentation d'un score de prédiction par le réseau de neurones artificiels de la présence d'un objet d'une autre classe sur l'image.

Comme expliqué ci-avant, l'image est une matrice de pixels chacun associé à une ou plusieurs valeurs. Dans une image couleur, chaque pixel peut être associé à trois valeurs (typiquement une valeur pour le rouge, une valeur pour le vert, et une valeur pour le bleu, éventuellement toutes comprises entre 0 et 255). Le décalage à appliquer est propre à chaque valeur.

On notera qu'en choisissant une quantité donnée faible, on affecte à peine l'aspect visuel de l'image pour un œil humain.

En outre, ce mode de mise en œuvre particulier peut comprendre un calcul d'un coût par une fonction de coût. Le coût illustre la distance entre l'image et un score idéal de prédiction d'un visage sur l'image (par exemple égal à 1) ou un score idéal de prédiction d'un objet d'une autre classe sur l'image (par exemple égal à 1).

Préférentiellement, on choisit une fonction de coût qui minimise la différence entre l'image et l'image antagoniste. Ceci peut être obtenu par l'utilisation d'une fonction de coût telle que la fonction entropie croisée (« Cross-entropy » en anglais). Ainsi, l'image antagoniste a un aspect visuel proche de l'image initial, de sorte qu'un observateur humain peut ne pas être capable de différencier l'image de l'image antagoniste.

Selon un mode de mise en œuvre particulier, la détermination de l'image antagoniste est mise en œuvre par la méthode du gradient rapide avec signe (« Fast Gradient Sign Method » en anglais) ou la méthode en une étape avec classe cible (« One-step target class method » en anglais).

Ces deux méthodes sont connues de l'homme du métier et décrites notamment dans les documents antérieurs « Adversarial examples in the physical world » (Alexey Kurakin, Ian Goodfellow, Samy Bengio, arXiv:1607.02533, disponible en mai 2020 à l'URL https://arxiv.org/pdf/1607.02533.pdf), « Explaining and Harnessing Adversarial Examples » (Ian J. Goodfellow, Jonathon Shlens, Christian Szegedy, arXiv:1412.6572, disponible en mai 2020 à l'URL https://arxiv.org/pdf/1412.6572.pdf).

Selon un mode de mise en œuvre particulier, la détermination de l'image antagoniste est mise en œuvre de manière itérative et comporte à chaque itération une application d'un décalage à chaque valeur de chaque pixel de l'image modifiée à l'itération précédente d'une quantité donnée, le décalage favorisant la baisse d'un score de prédiction par le réseau de neurones artificiels de la présence d'un visage sur l'image modifiée à l'itération précédente, ou l'augmentation d'un score de prédiction par le réseau de neurones artificiels de la présence d'un objet d'une autre classe sur l'image modifiée à l'itération précédente.

Il a été observé que les méthodes itératives sont plus précises et permettent d'obtenir des images antagonistes qui sont encore plus proches visuellement des images initiales (tout en étant capable de « tromper » le réseau de neurones artificiels).

Selon un mode de mise en œuvre particulier, la détermination de manière itérative s'arrête lorsqu'un score de prédiction par le réseau de neurones artificiels de la présence d'un objet d'une autre classe sur l'image modifiée à l'itération précédente atteint un maximum donné.

Par exemple, si l'autre classe est un fruit, les itérations s'arrêtent lorsqu'un score de prédiction de fruit a dépassé un maximum donné (par exemple 0,5).

Selon un mode de mise en œuvre particulier, la valeur de chaque valeur de pixel des images modifiée à chaque itération est bornée autour de la valeur correspondante de pixel sur l'image à plus ou moins une autre quantité donnée, et entre des valeurs fixes données.

Les valeurs fixes données peuvent être les valeurs minimales et maximales qu'une valeur de pixel peut prendre, par exemple 0 et 255.

Ce mode de mise en œuvre particulier permet d'éviter l'obtention de valeurs aberrantes, et en particulier de valeurs qui n'ont pas de sens car inférieures à 0 ou supérieures à 255.

Selon un mode de mise en œuvre particulier, la détermination de l'image antagoniste est mise en œuvre par la méthode basique itérative (« Basic Iterative Method » en anglais) ou par la méthode itérative de la classe la moins probable (« Iterative Least-Likely Class Method » en anglais).

Ces deux méthodes sont connues de l'homme du métier et décrites notamment dans le document antérieur« Adversarial examples in the physical world » (Alexey Kurakin, Ian Goodfellow, Samy Bengio, arXiv:1607.02533, disponible en mai 2020 à l'URL https://arxiv.org/pdf/1607.02533.pdf).

Selon un mode de mise en œuvre particulier, le transfert comprend une impression de l'image antagoniste sur une surface du document de sécurité ou un enregistrement de l'image antagoniste dans une mémoire du document de sécurité (par exemple une mémoire non-volatile du document de sécurité).

L'invention propose également un procédé d'authentification d'un document de sécurité comprenant :

une acquisition d'une image stockée sur le document de sécurité et sur laquelle un visage du porteur du document est représenté,
un traitement de l'image par un réseau de neurones artificiels adapté pour subir un apprentissage automatique pour détecter la présence d'un visage sur des images, et
si le traitement indique que la détection d'un visage représenté sur l'image est un échec, alors le document de sécurité est authentifié.

Dans ce procédé, on interprète un échec de la détection de la présence d'un visage comme une réussite de l'authentification. Cela signifie que l'image est une image antagoniste par rapport au document de sécurité.

Si le document est authentifié, un message de validation peut être émis, par exemple affiché sur une interface humain-machine.

Un traitement qui indique qu'aucun visage n'est représenté sur l'image (un échec) peut consister en un score de détection de la présence d'un visage inférieur à un seuil donné (par exemple 0,5), ou encore un score de détection de la présence d'un objet d'une autre classe supérieur à un seuil donné ou supérieur au score de détection de la présence d'un visage.

Selon un mode de mise en œuvre particulier, le réseau de neurones artificiels est le réseau de neurones artificiels utilisé dans le procédé de sécurisation tel que défini ci-avant.

Ce réseau de neurones peut être identique (structures et valeurs des poids identiques) voire quasi identique, s'il a subi par exemple une étape supplémentaire d'entrainement pour la détection de la présence d'un visage.

Selon un mode de mise en œuvre particulier, l'image stockée sur le document de sécurité est une image antagoniste obtenue par le procédé de sécurisation tel que défini ci-avant.

L'invention propose également un document de sécurité dans lequel une image antagoniste obtenue par le procédé de sécurisation défini ci-avant est stockée.

En fait, le procédé de sécurisation peut être intégré dans un procédé de fabrication d'un document de sécurité.

L'invention propose également un système de sécurisation d'une image à enregistrer dans un document de sécurité, un visage du porteur du document étant représenté sur l'image, le système comprenant :

un module de détermination d'une image antagoniste de l'image par rapport à un réseau de neurones artificiels adapté pour subir un apprentissage automatique pour détecter la présence d'un visage sur des images et par rapport à la classe visage,
un module de transfert de l'image antagoniste sur le document de sécurité de sorte que l'image antagoniste soit stockée sur le document de sécurité.

Ce système peut être configuré pour la mise en œuvre de tous les modes de mise en œuvre particuliers du procédé de sécurisation tel que défini ci-avant.

En particulier, ce système peut être un système informatique.

En fait, le système de sécurisation peut être intégré dans un système de fabrication d'un document de sécurité.

L'invention propose également un système d'authentification d'un document de sécurité comprenant :

un module d'acquisition d'une image stockée sur le document de sécurité et sur laquelle un visage du porteur du document est représenté,
un module de traitement de l'image par un réseau de neurones artificiels adapté pour subir un apprentissage automatique pour détecter la présence d'un visage sur des images,
un module pour authentifier le document de sécurité si le traitement indique que la détection d'un visage représenté sur l'image est un échec.

Ce système peut être configuré pour la mise en œuvre de tous les modes de mise en œuvre du procédé d'authentification tel que défini ci-avant.

L'invention propose également un programme d'ordinateur comportant des instructions pour l'exécution des étapes d'un procédé de sécurisation d'image tel que défini ci-avant lorsque ledit programme est exécuté par un ordinateur.

L'invention propose également un programme d'ordinateur comportant des instructions pour l'exécution des étapes d'un procédé d'authentification tel que défini ci-avant lorsque ledit programme est exécuté par un ordinateur.

A noter que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose également un support d'enregistrement lisible par un ordinateur sur lequel est enregistré un programme d'ordinateur comprenant des instructions pour l'exécution des étapes d'un procédé de sécurisation d'image tel que défini ci-avant.

L'invention propose également un support d'enregistrement lisible par un ordinateur sur lequel est enregistré un programme d'ordinateur comprenant des instructions pour l'exécution des étapes d'un procédé d'authentification tel que défini ci-avant.

Les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] La figure 1 représente schématiquement les étapes d'un procédé de sécurisation selon un exemple.

[Fig. 2] La figure 2 représente schématiquement les étapes d'un procédé d'authentification selon un exemple.

[Fig. 3] La figure 3 représente un système de sécurisation selon un exemple.

[Fig. 4] La figure 3 représente un système d'authentification selon un exemple.

Description des modes de réalisation

On va maintenant décrire l'utilisation d'images antagonistes utilisées pour sécurisées des documents de sécurité.

Dans la présente description, les documents de sécurité peuvent être des documents d'identité tels que des passeports, ou encore des visas de séjour. Les documents de sécurité sont ici associés à un porteur (une personne) et ils sont destinés à stocker une image du visage de ce porteur de manière imprimée ou dans une mémoire non-volatile électronique.

A titre indicatif, les images de visages peuvent être en accord avec la norme ISO/IEC 19794-5 : 2005 ou encore en accord avec la norme 9303 partie 9 de l'Organisation de l'aviation civile internationale (OACI ; en anglais : International Civil Aviation Organization, ICAO), disponible en mai 2020 à l'URL https://www.icao.int/publications/Documents/9303 p9 cons fr.pdf.

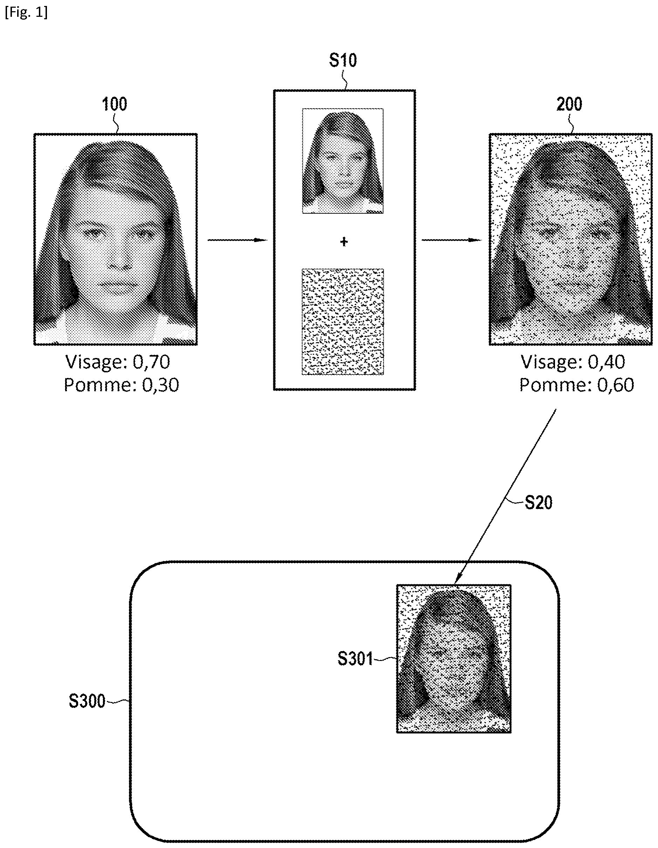

Sur la figure 1, on a représenté schématiquement les étapes d'un procédé de sécurisation d'une image 100 à enregistrer dans un document de sécurité. Cette image peut avoir la forme d'un fichier informatique définissant une matrice de pixels. Chaque pixel est associé à trois valeurs comprises entre 0 et 255 et correspondant respectivement aux canaux rouge, vert, et bleu.

Un réseau de neurones artificiels du type réseau de neurones convolutifs peut ensuite être utilisé. Ce réseau a été préalablement entrainé d'une manière connue en soit et qui ne sera pas davantage décrite ici pour détecter deux classes d'objets présents/visibles/représentés sur des images. Ce réseau est donc différentiable et entrainable (par exemple par la méthode du gradient descendant), il comporte suffisamment d'entrées pour traiter tous les pixels d'une image (et plus précisément toutes les valeurs de pixel de l'image), et deux sorties associées chacune à une classe d'objet. Ces sorties peuvent être des scores de prédiction associées à la présence sur l'image de chaque classe d'objet.

Dans l'exemple illustré, le réseau a été entrainé pour deux classes : visage et pomme.

Le traitement de l'image 100 par ce réseau de neurones artificiels délivre donc les score suivants (compris entre 0, absence, et 1, présence) :

Visage : 0,70, et
Pomme : 0,30.

L'homme du métier saura reconnaitre une prédiction de la présence d'un visage, par exemple parce que le score associé à visage est le plus élevé, et parce que ce score dépasse un seuil donné, par exemple 0,5.

Dans l'étape S10, on détermine une image antagoniste 200 (« adversarial image » en anglais) par rapport au réseau de neurones artificiels qui a délivré ces scores, par rapport à la classe visage.

Cela signifie que l'image antagoniste obtenue, lorsqu'elle sera traitée par le réseau de neurones artificiels, conduira à l'obtention de scores qui indiquent qu'il n'y a pas de visage visible/représenté/présent sur l'image. Ici, le traitement de l'image antagoniste par le réseau de neurones artificiels permet d'obtenir des scores de 0,40 pour la classe visage et 0,60 pour la classe pomme.

On peut ainsi transferer (étape S20) par impression l'image antagoniste 200 sur un document de sécurité 300, pour obtenir une image stockée sous forme imprimée 301.

L'image imprimée 301 est difficile à distinguer de l'image initiale 100 par un observateur humain. En particulier, cette image peut être toujours en accord avec la norme ISO/IEC 19794-5 : 2005 ou encore en accord avec la norme 9303 partie 9 de l'Organisation de l'aviation civile internationale (OACI ; en anglais : International Civil Aviation Organization, ICAO), disponible en mai 2020 à l'URL https://www.icao.int/publications/Documents/9303 p9 cons fr.pdf.

On va maintenant décrire des exemples d'implémentation de l'étape S10, en particulier des exemples qui permettent de modifier le moins possible l'image 100 tout en s'assurant que le réseau de neurones artificiel produira une image antagoniste. Ces exemples sont notamment décrits dans le document « Adversarial examples in the physical world » (Alexey Kurakin, Ian Goodfellow, Samy Bengio, arXiv:1607.02533, disponible en mai 2020 à l'URL https://arxiv. org/pdf/1607.02533.pdf) qui est incorporé dans la présente description par référence.

Dans ce qui suit, on note :

- X une image qui n'a pas été modifiée, par exemple une image telle que l'image 100.
- Xadv l'image antagoniste obtenue après la mise en œuvre de l'étape S10 et qui correspond à l'image 200.
- $\varepsilon$ une quantité donnée, qui correspond à la perturbation antagoniste. $\varepsilon$ est exprimé en valeur de pixel (par exemple compris en 0 et 255).
- J(X,ytrue) la fonction coût (« loss function » en anglais) utilisée pour l'entrainement du réseau de neurones artificiels avec ytrue la classe attenduepour X (c'est-à-dire visage). Cette fonction peut être la fonction entropie croisée (« Cross-entropy » en anglais).
- ClipX,$\varepsilon$\{A} la fonction de bornage d'une image A à plus ou moins $\varepsilon$ pour chaque valeur de pixel

Des premières méthodes connues sont mises en œuvre en une étape et permettent de ne calculer qu'un unique gradient. Elles permettent de déterminer la perturbation optimale, c'est-à-dire l'image antagoniste la plus proche visuellement de l'image initiale mais qui permet de « tromper » le réseau de neurones artificiels.

Dans la méthode du gradient rapide avec signe, on a :

$$Xadv = X + \varepsilon.sign(\nabla J(X, ytrue))$$

Avec sign() la fonction signe qui a pour valeur 1 si le gradient de J(X,ytrue) est positif et -1 si le gradient de J(X,ytrue) est négatif. Ce gradient est calculé par rapport à chaque valeur de pixel de l'image.

Ainsi, le décalage que l'on applique (de plus ou moins $\varepsilon$) favorise la baisse d'un score de prédiction par le réseau de neurones artificiels de la présence d'un visage sur l'image. On vise à augmenter le résultat de la fonction coût, ce qui implique que l'on s'écarte du résultat visage (la fonction coût délivre une valeur qui s'approche de 0 si la détection est proche de ytrue).

Une autre méthode connue est celle en une étape avec classe cible :

$$Xadv = X - \varepsilon.sign(\nabla J(X, ytarget)$$

Avec ytarget l'autre classe, par exemple pomme.

Ici, on favorise l'augmentation d'un score de prédiction par le réseau de neurones artificiels de la présence d'une pomme pour l'image X. Une classe aléatoire peut être utilisée pour ytarget.

Dans les exemples, ci-dessus, le calcul des gradients peut être mis en œuvre par rétro-propagation d'une manière connue en soi et qui sera brièvement décrite ici. :

- Tout d'abord, pendant le traitement de l'image par le réseau de neurones artificiels, les opérations effectuées à chaque nœud du réseau de neurones artificiels sont mémorisées.
- Un coût est ensuite calculé par exemple au moyen de la fonction entropie croisée par rapport à la classe attendue (par exemple visage ou un autre objet). Ce coût indique l'éloignement entre le score obtenu et la prédiction souhaitée.
- On met en œuvre une rétro-propagation du coût en parcourant le réseau de neurones artificiels depuis sa sortie vers l'entrée, en utilisant les opérations mémorisées ci-avant à chaque nœud, et en calculant une dérivée partielle (c'est-à-dire un gradient) pour chaque nœud.
- On déduit des dérivées partielles/gradients un gradient pour chaque valeur de pixel de l'image qui a été traitée. Ce gradient a un signe qui est utilisée par la fonction sign().

On connait également des méthodes itératives. Par exemple, dans la méthode itérative basique, on calcule à chaque itération d'indice i une image X(i)adv :

$$X(0)adv = X,$$

**EP 4 162 375 B1**

$$X(n+1)adv = ClipX,\varepsilon\{X(n)adv+\alpha sign(\nabla J(X(n)adv,ytrue)$$

Avec $\alpha$ une autre quantité donnée, plus faible que $\varepsilon$.

Enfin, on connait la méthode itérative de la classe la moins probable dans laquelle :

$$X(0)adv=X,$$

$$X(n+1)adv = ClipX,\varepsilon\{X(n)adv-\alpha sign(\nabla J(X(n)adv,ytarget)$$

Avec comme ci-dessus ytarget une autre classe, éventuellement la moins probable (le choix de la classe peut être défini au cours d'étapes préalables de tests).

Pour ces deux méthodes itératives, on peut par exemple mettre en œuvre des itérations jusqu'à ce qu'un score de prédiction de la présence d'une pomme atteigne un maximum donné.

Enfin, on peut noter que pour toutes les méthodes décrites ci-avant, on va modifier les valeurs de chaque pixel d'une quantité faible qui atteint au maximum $\varepsilon$. En choisissant $\varepsilon$ petit, on affecte très peu l'aspect visuel de l'image, ce qui cache davantage le traitement qu'a subit l'image en devant une image antagoniste. L'utilisation de la fonction de coût entropie croisée permet également d'obtenir une image antagoniste visuellement proche de l'image initiale.

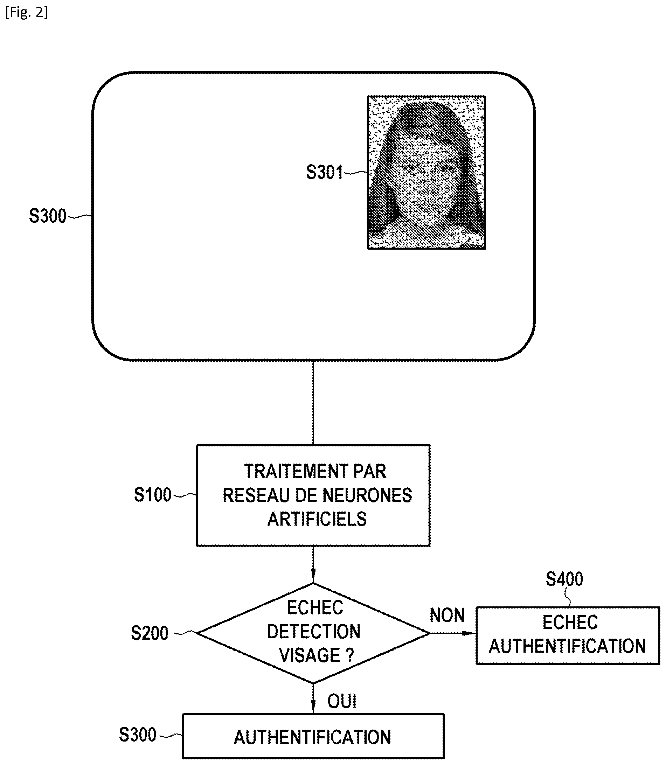

Sur la figure 2, on a représenté schématiquement les étapes d'un procédé d'authentification d'un document de sécurité.

Le procédé décrit ci-avant en référence à la figure 1 peut être mis en œuvre par une autorité qui délivre des documents de sécurité. Le procédé qui sera décrit en référence à la figure 2 est quant à lui mis en œuvre par exemple par une autorité de contrôle de document de sécurité, typiquement un poste de douane.

Dans le procédé de la figure 2, on va traiter le document de sécurité 300 décrit en référence à la figure 1 et sur lequel l'image antagoniste 301 a été imprimée.

Dans une première étape S100, on traite cette image avec un réseau de neurones artificiels entrainé pour la détection de la présence de visage, typiquement le réseau utilisé par l'autorité du procédé de la figure 1.

Ce traitement délivre des scores de détection qui peuvent être interprétés comme signifiant un échec ou une réussite de la détection d'un visage. Par exemple, si le score de détection pour la classe visage est inférieur à un seuil donné, ou s'il est inférieur au score de détection de la classe pomme, ou si le score de détection de la classe pomme est supérieur à un autre seuil donné, on peut considérer qu'il y a un échec de la détection d'un visage.

A l'étape S200 on effectue cette vérification. Si on a bien un échec alors l'étape S300 est mise en œuvre et on considère que le document de sécurité est authentifié. Un message peut apparaitre sur une interface humain-machine.

Sinon, l'étape S400 est mise en œuvre pour indique que le document de sécurité n'est pas authentifié, car l'image qui a été imprimée dessus n'est pas une image antagoniste par rapport au réseau de neurones artificiels considéré pour la classe visage.

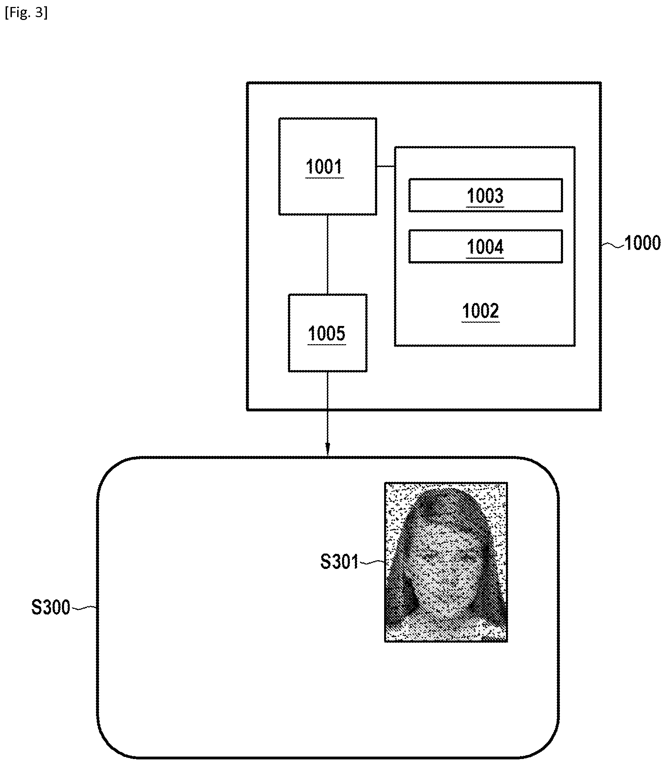

La figure 3 est une représentation schématique d'un système 1000 de sécurisation d'une image. Ce système peut mettre en œuvre le procédé décrit en référence à la figure 1.

Le système 1000 a une structure de système informatique.

Il comporte notamment un processeur 1001 et une mémoire non-volatile 1002. Dans la mémoire non-volatile 1002, on a enregistré un programme d'ordinateur comprenant :

- des instructions 1003 pour mettre en œuvre l'étape S10, et
- des instructions 1004 pour mettre en œuvre l'étape S20 au moyen d'un dispositif d'impression 1005.

Les instructions 1003 forment avec le processeur 1001 un module de détermination d'une image antagoniste d'une image par rapport à un réseau de neurones artificiels (qui peut être mémorisé dans la mémoire 1002) adapté pour subir un apprentissage automatique pour détecter la présence d'un visage sur des images et par rapport à la classe visage.

Les instructions 1004 forment avec le processeur 1001 et le dispositif d'impression 1005 un module de transfert de l'image antagoniste sur le document de sécurité de sorte que l'image antagoniste soit stockée sur le document de sécurité.

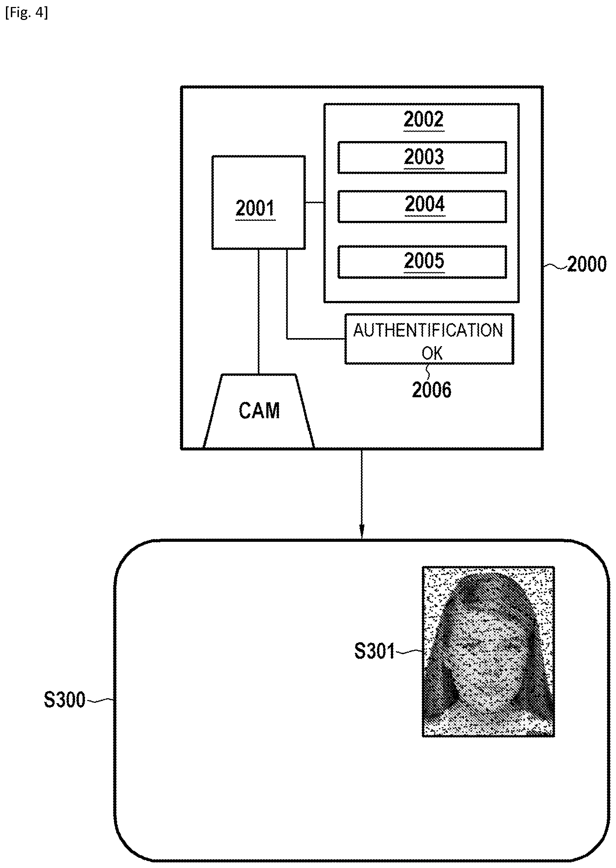

La figure 4 est une représentation schématique d'un système 2000 d'authentification d'un document de sécurité. Ce système peut mettre en œuvre le procédé décrut en référence à la figure 2.

Le système 2000 a une structure de système informatique.

Il comporte notamment un processeur 2001 et une mémoire non-volatile 2002. Dans la mémoire non-volatile 2002, on a enregistré un programme d'ordinateur comprenant :

- des instructions 2003 pour mettre en œuvre une acquisition d'une image stockée sur le document de sécurité et sur laquelle un visage du porteur du document est représenté, par exemple en contrôlant une caméra CAM,
- des instructions 2004 pour mettre en œuvre l'étape S100,
- des instructions 2005 pour mettre en œuvre l'étape S200.

En outre, le système 2000 comporte une interface humain-machine 2006, ici un écran sur lequel le résultat de l'authentification peut être affiché.

Les instructions 2003 forment avec le processeur 2001 et la caméra CAM un module d'acquisition d'une image stockée sur le document de sécurité et sur laquelle un visage du porteur du document est représenté.

Les instructions 2004 forment avec le processeur 2001 un module de traitement de l'image par un réseau de neurones artificiels (éventuellement mémorisé dans la mémoire 2002) adapté pour subir un apprentissage automatique pour détecter la présence d'un visage sur des images.

Les instructions 2005 forment avec le processeur 2001 un module pour authentifier le document de sécurité si le traitement indique que la détection d'un visage représenté sur l'image est un échec.

Les modes de mise en œuvre et de réalisation décrits ci-avant utilisent les caractéristiques particulières des images antagonistes pour sécuriser des images et donc des documents de sécurité, pour ensuite authentifier des documents de sécurité (et donc des images).

## Revendications

1. Procédé de sécurisation d'une image à enregistrer dans un document de sécurité, un visage du porteur du document de sécurité étant représenté sur l'image, le procédé comprenant:

   une détermination (S10) d'une image antagoniste de l'image par rapport à un réseau de neurones artificiels adapté pour subir un apprentissage automatique pour détecter la présence d'un visage sur des images et par rapport à la classe visage,
   un transfert (S20) de l'image antagoniste sur le document de sécurité de sorte que l'image antagoniste soit stockée sur le document de sécurité.

2. Procédé selon la revendication 1, dans lequel la détermination de l'image antagoniste comporte une application d'un décalage à chaque valeur de chaque pixel de l'image d'une quantité donnée ($\varepsilon$), le décalage favorisant la baisse d'un score de prédiction par le réseau de neurones artificiels de la présence d'un visage sur l'image, ou l'augmentation d'un score de prédiction par le réseau de neurones artificiels de la présence d'un objet d'une autre classe sur l'image.

3. Procédé selon la revendication 1 ou 2, dans lequel la détermination de l'image antagoniste est mise en œuvre par la méthode du gradient rapide avec signe ou la méthode en une étape avec classe cible.

4. Procédé selon la revendication 1, dans lequel la détermination de l'image antagoniste est mise en œuvre de manière itérative et comporte à chaque itération une application d'un décalage à chaque valeur de chaque pixel de l'image modifiée à l'itération précédente d'une quantité donnée ($\alpha$), le décalage favorisant la baisse d'un score de prédiction par le réseau de neurones artificiels de la présence d'un visage sur l'image modifiée à l'itération précédente, ou l'augmentation d'un score de prédiction par le réseau de neurones artificiels de la présence d'un objet d'une autre classe sur l'image modifiée à l'itération précédente.

5. Procédé selon la revendication 4, dans lequel la détermination de manière itérative s'arrête lorsqu'un score de prédiction par le réseau de neurones artificiels de la présence d'un objet d'une autre classe sur l'image modifiée à l'itération précédente atteint un maximum donné.

6. Procédé selon la revendication 4 ou 5, dans lequel la valeur de chaque valeur de pixel des images modifiées à chaque itération est bornée autour de la valeur correspondante de pixel sur l'image à plus ou moins une autre quantité donnée ($\varepsilon$), et entre des valeurs fixes données.

7. Procédé selon l'une quelconque des revendications 1, 4, ou 5, dans lequel la détermination de l'image antagoniste est mise en œuvre par la méthode basique itérative ou par la méthode itérative de la classe la moins probable.

**EP 4 162 375 B1**

8. Procédé selon l'une quelconque des revendications 1 à 7, dans lequel le transfert comprend une impression (S20) de l'image antagoniste sur une surface du document de sécurité ou un enregistrement de l'image antagoniste dans une mémoire du document de sécurité.

9. Procédé d'authentification d'un document de sécurité comprenant :

   une acquisition d'une image stockée sur le document de sécurité et sur laquelle un visage du porteur du document est représenté, l'image stockée sur le document de sécurité étant une image antagoniste obtenue par le procédé selon l'une quelconque des revendications 1 à 8,
   un traitement (S100) de l'image par un réseau de neurones artificiels adapté pour subir un apprentissage automatique pour détecter la présence d'un visage sur des images, le réseau de neurones artificiels étant le réseau de neurones artificiels utilisé dans le procédé selon l'une quelconque des revendications 1 à 8, et
   si le traitement indique (S200) que la détection d'un visage représenté sur l'image est un échec, alors le document de sécurité est authentifié.

10. Procédé de fabrication d'un document de sécurité dans lequel une image antagoniste (301) obtenue par le procédé selon l'une quelconque des revendications 1 à 8 est stockée.

11. Système de sécurisation d'une image à enregistrer dans un document de sécurité, un visage du porteur du document étant représenté sur l'image, le système comprenant :

   un module (1001, 1003) de détermination d'une image antagoniste de l'image par rapport à un réseau de neurones artificiels adapté pour subir un apprentissage automatique pour détecter la présence d'un visage sur des images et par rapport à la classe visage,
   un module de transfert (1001, 1004, 1005) de l'image antagoniste sur le document de sécurité de sorte que l'image antagoniste soit stockée sur le document de sécurité.

12. Système d'authentification d'un document de sécurité comprenant :

   un module d'acquisition (2001, 2003, CAM) d'une image stockée sur le document de sécurité et sur laquelle un visage du porteur du document est représenté, l'image stockée sur le document de sécurité étant une image antagoniste obtenue par le procédé selon l'une quelconque des revendications 1 à 8,
   un module de traitement (2001, 2004) de l'image par un réseau de neurones artificiels adapté pour subir un apprentissage automatique pour détecter la présence d'un visage sur des images, le réseau de neurones artificiels étant le réseau de neurones artificiels utilisé dans le procédé selon l'une quelconque des revendications 1 à 8,
   un module pour authentifier (2001, 2005) le document de sécurité si le traitement indique que la détection d'un visage représenté sur l'image est un échec.

13. Programme d'ordinateur comportant des instructions pour l'exécution des étapes d'un procédé de sécurisation d'une image selon l'une quelconque des revendications 1 à 8, lorsque ledit programme est exécuté par un ordinateur.

14. Support d'enregistrement lisible par un ordinateur sur lequel est enregistré un programme d'ordinateur comprenant des instructions pour l'exécution des étapes d'un procédé de sécurisation d'une image selon l'une quelconque des revendications 1 à 8.

15. Programme d'ordinateur comportant des instructions pour l'exécution des étapes d'un procédé d'authentification selon la revendication 9, lorsque ledit programme est exécuté par un ordinateur.

**Patentansprüche**

1. Verfahren zur Sicherung eines in einem Sicherheitsdokument zu speichernden Bildes, wobei ein Gesicht des Trägers des Sicherheitsdokuments auf dem Bild dargestellt ist, wobei das Verfahren Folgendes umfasst:

   eine Bestimmung (S10) eines antagonistischen Bildes des Bildes in Bezug auf ein künstliches Neuronennetzwerk, das zum maschinellen Lernen geeignet ist, um das Vorhandensein eines Gesichts in Bildern und in Bezug auf die Gesichtsklasse zu erkennen,

eine Übertragung (S20) des antagonistischen Bildes auf das Sicherheitsdokument, so dass das antagonistische Bild auf dem Sicherheitsdokument abgelegt wird.

2. Verfahren nach Anspruch 1, wobei die Bestimmung des antagonistischen Bildes die Anwendung einer Verschiebung auf jeden Wert jedes Pixels des Bildes um eine bestimmte Menge ($\varepsilon$) aufweist, wobei die Verschiebung die Verringerung eines Vorhersagewerts durch das künstliche Neuronennetzwerk des Vorhandenseins eines Gesichts auf dem Bild oder die Erhöhung eines Vorhersagewerts durch das künstliche Neuronennetzwerk des Vorhandenseins eines Objekts einer anderen Klasse auf dem Bild begünstigt.

3. Verfahren nach Anspruch 1 oder 2, wobei die Bestimmung des antagonistischen Bildes durch das schnelle Gradientenverfahren mit Vorzeichen oder das einstufige Verfahren mit Zielklasse umgesetzt wird.

4. Verfahren nach Anspruch 1, wobei die Bestimmung des antagonistischen Bildes iterativ umgesetzt wird und bei jeder Iteration die Anwendung einer Verschiebung auf jeden Wert jedes Pixels des in der vorherigen Iteration geänderten Bildes um eine bestimmte Menge ($\alpha$) aufweist, wobei die Verschiebung die Verringerung eines Vorhersagewerts durch das künstliche Neuronennetzwerk des Vorhandenseins eines Gesichts auf dem in der vorherigen Iteration geänderten Bild oder die Erhöhung eines Vorhersagewerts durch das künstliche Neuronennetzwerk für das Vorhandensein eines Objekts einer anderen Klasse auf dem Bild, das bei der vorherigen Iteration geändert wurde, begünstigt.

5. Verfahren nach Anspruch 4, wobei die iterative Bestimmung endet, wenn ein Vorhersagewert durch das künstliche Neuronennetzwerk für das Vorhandensein eines Objekts einer anderen Klasse auf dem in der vorherigen Iteration geänderten Bild ein bestimmtes Maximum erreicht.

6. Verfahren nach Anspruch 4 oder 5, wobei der Wert jedes Pixelwerts der bei jeder Iteration geänderten Bilder um den entsprechenden Pixelwert auf dem Bild bei plus oder minus einer anderen gegebenen Menge ($\varepsilon$) und zwischen gegebenen festen Werten begrenzt ist.

7. Verfahren nach einem der Ansprüche 1, 4 oder 5, wobei die Bestimmung des antagonistischen Bildes durch das iterative Basisverfahren oder durch das iterative Verfahren der unwahrscheinlichsten Klasse durchgeführt wird.

8. Verfahren nach einem der Ansprüche 1 bis 7, wobei die Übertragung ein Drucken (S20) des antagonistischen Bildes auf eine Oberfläche des Sicherheitsdokuments oder ein Speichern des antagonistischen Bildes in einem Speicher des Sicherheitsdokuments umfasst.

9. Verfahren zur Authentifizierung eines Sicherheitsdokuments, das Folgendes umfasst:

eine Erfassung eines auf dem Sicherheitsdokument abgelegten Bildes und auf dem ein Gesicht des Dokumententrägers dargestellt ist, wobei das auf dem Sicherheitsdokument abgelegte Bild ein durch das Verfahren nach einem der Ansprüche 1 bis 8 erhaltenes antagonistisches Bild ist,
eine Verarbeitung (S100) des Bildes durch ein künstliches Neuronennetzwerk, das zum maschinellen Lernen geeignet ist, um das Vorhandensein eines Gesichts auf Bildern zu erkennen, wobei das künstliche Neuronennetzwerk das in dem Verfahren nach einem der Ansprüche 1 bis 8 verwendete künstliche Neuronennetzwerk ist, und
wenn die Verarbeitung (S200) anzeigt, dass die Erkennung eines auf dem Bild dargestellten Gesichts fehlgeschlagen ist, dann wird das Sicherheitsdokument authentifiziert.

10. Verfahren zur Herstellung eines Sicherheitsdokuments, wobei ein durch das Verfahren nach einem der Ansprüche 1 bis 8 erhaltenes antagonistisches Bild (301) abgelegt ist.

11. System zur Sicherung eines Bildes, das in einem Sicherheitsdokument gespeichert werden soll, wobei ein Gesicht des Trägers des Dokuments auf dem Bild dargestellt ist, wobei das System Folgendes umfasst:

ein Modul (1001, 1003) zur Bestimmung eines antagonistischen Bildes des Bildes in Bezug auf ein künstliches Neuronennetzwerk, das zum maschinellen Lernen geeignet ist, um das Vorhandensein eines Gesichts in Bildern und in Bezug auf die Gesichtsklasse zu erkennen,
ein Übertragungsmodul (1001, 1004, 1005) des antagonistischen Bildes auf das Sicherheitsdokument, so dass das antagonistische Bild auf dem Sicherheitsdokument abgelegt wird.

12. System zur Authentifizierung eines Sicherheitsdokuments, das Folgendes umfasst:

ein Erfassungsmodul (2001, 2003, CAM) eines auf dem Sicherheitsdokument abgelegten Bildes und auf dem ein Gesicht des Dokumententrägers dargestellt ist, wobei das auf dem Sicherheitsdokument abgelegte Bild ein durch das Verfahren nach einem der Ansprüche 1 bis 8 erhaltenes antagonistisches Bild ist,
ein Bildverarbeitungsmodul (2001, 2004) durch ein künstliches Neuronennetzwerk, das zum maschinellen Lernen geeignet ist, um das Vorhandensein eines Gesichts auf Bildern zu erkennen, wobei das künstliche Neuronennetzwerk das in dem Verfahren nach einem der Ansprüche 1 bis 8 verwendete künstliche Neuronennetzwerk ist,
ein Modul zur Authentifizierung (2001, 2005) des Sicherheitsdokuments, wenn die Verarbeitung anzeigt, dass die Erkennung eines auf dem Bild dargestellten Gesichts fehlgeschlagen ist.

13. Computerprogramm umfassend Anweisungen zur Durchführung der Schritte des Verfahrens zur Sicherung nach einem der Ansprüche 1 bis 8, wenn das Programm von einem Computer durchgeführt wird.

14. Computerlesbares Speichermedium, auf dem ein Computerprogramm gespeichert ist, das Anweisungen zur Durchführung der Schritte eines Verfahrens zur Sicherung eines Bildes nach einem der Ansprüche 1 bis 8 umfasst.

15. Computerprogramm umfassend Anweisungen zur Durchführung der Schritte des Verfahrens zur Authentifizierung nach Anspruch 9, wenn das Programm von einem Computer durchgeführt wird.

**Claims**

1. Method for protecting an image to be recorded in a security document, a face of the security document holder being represented on the image, the method comprising:

determining (S10) an image antagonist of the image with respect to an artificial neural network adapted to undergo machine learning to detect the presence of a face on images and with respect to the face class,
transferring (S20) the antagonist image onto the security document such that the opposing image is stored on the security document.

2. Method according to claim 1, wherein determining the opposing image includes applying an offset to each value of each pixel of the image by a given amount ($\varepsilon$), the offset promoting the decrease of a score of prediction by the artificial neural network of the presence of a face on the image, or the increase of a score of prediction by the artificial neural network of the presence of an object of another class on the image.

3. Method according to claim 1 or 2, wherein the determination of the antagonist image is implemented by the fast gradient sign method or the one-step method with target class.

4. Method according to claim 1, wherein the determination of the antagonist image is implemented iteratively and includes at each iteration an application of an offset to each value of each pixel of the image modified at the previous iteration by a given amount ($\alpha$), the offset promoting the decrease of a score of prediction by the artificial neural network of the presence of a face on the image modified at the previous iteration, or increasing a score by the artificial neural network of prediction of the presence of an object of another class on the image modified in the previous iteration.

5. Method according to claim 4, wherein the iterative determination stops when a score of prediction by the artificial neural network of the presence of an object of another class on the image modified in the previous iteration reaches a given maximum.

6. Method according to claim 4 or 5, wherein the value of each pixel value of the images modified at each iteration is bounded around the corresponding pixel value on the image at more or less another given amount ($\varepsilon$), and between given fixed values.

7. Method according to any one of claims 1, 4, or 5, wherein the determination of the antagonist image is implemented by the basic iterative method or by the iterative method of the least probable class.

8. Method according to any one of claims 1 to 7, wherein the transfer comprises printing (S20) the antagonist image onto a surface of the security document or recording the antagonist image in a memory of the security document.

9. Method for authenticating a security document comprising:

acquiring an image stored on the security document and on which a face of the document holder is represented, the image stored on the security document being an antagonist image obtained by the method according to any one of claims 1 to 8,

processing (S100) the image by an artificial neural network adapted to undergo machine learning to detect the presence of a face on images, the artificial neural network being the artificial neural network used in the method according to any one of claims 1 to 8, and

if the processing indicates (S200) that the detection of a face represented on the image is a failure, then the security document is authenticated.

10. Method for manufacturing a security document wherein an antagonist image (301) obtained by the method according to any one of claims 1 to 8 is stored.

11. System for protecting an image to be recorded in a security document, a face of the document holder being represented on the image, the system comprising:

a module (1001, 1003) for determining an image antagonist of the image with respect to an artificial neural network adapted to undergo machine learning to detect the presence of a face on images and with respect to the face class,

a module (1001, 1004, 1005) for transferring the antagonist image onto the security document such that the antagonist image is stored on the security document.

12. System for authenticating a security document comprising:

a module (2001, 2003, CAM) for acquiring an image stored on the security document and on which a face of the document holder is represented, the image stored on the security document being an antagonist image obtained by the method according to any one of claims 1 to 8,

a module (2001, 2004) for processing the image by an artificial neural network adapted to undergo machine learning to detect the presence of a face on images, the artificial neural network being the artificial neural network used in the method according to any one of claims 1 to 8,

a module (2001, 2005) for authenticating the security document if the processing indicates that the detection of a face represented on the image is a failure.

13. Computer program comprising instructions for performing the steps of a method for protecting an image according to any one of claims 1 to 8, when said program is executed by a computer.

14. Computer-readable recording medium on which a computer program is recorded comprising instructions for performing the steps of a method for protecting an image according to any one of claims 1 to 8.

15. Computer program comprising instructions for performing the steps of an authentication method according to claim 9, when said program is executed by a computer.

[Fig. 1]

S10

100

Visage: 0,70
Pomme: 0,30

200

Visage: 0,40
Pomme: 0,60

S20

S300

S301

[Fig. 2]

S300

S301

S100 — TRAITEMENT PAR
RESEAU DE NEURONES
ARTIFICIELS

S200 — ECHEC
DETECTION
VISAGE ?

NON

S400

ECHEC
AUTHENTIFICATION

OUI

S300 — AUTHENTIFICATION

[Fig. 3]

[Fig. 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3035253

**Littérature non-brevet citée dans la description**

- Digital image watermarking for photo authentication in Thai national ID card. **KHARITTHA THONGKOR et al.** ELECTRICAL ENGINEERING/ ELECTRONICS, COMPUTER, TELECOMMUNICATIONS AND INFORMATION TECHNOLOGY (ECTI-CON), 2012 9TH INTERNATIONAL CONFERENCE ON. IEEE, 16 May 2012, 1-4
- Adversarial Embedding: A robust and elusive Steganography and Watermarking technique. **SALAH GHAMIZI et al.** 201 OLIN LIBRARY CORNELL UNIVERSITY ITHACA, NY 14853. ARXIV.ORG, CORNELL UNIVERSITY LIBRARY, 14 November 2019
- **ALEXEY KURAKIN** ; **LAN GOODFELLOW** ; **SAMY BENGIO**. Adversarial examples in the physical world. *arXiv:1607.02533*, May 2020, https://arxiv.org/pdf/1607.02533.pdf
- **ALEXEY KURAKIN** ; **LAN GOODFELLOW** ; **SAMY BENGIO**. Adversarial Machine Learning at Scale. *arXiv:1611.01236*, May 2020, https://arxiv.org/pdf/1611.01236.pdf
- **ALINA KUZNETSOVA** ; **HASSAN ROM** ; **NEIL ALLDRIN** ; **JASPER UIJLINGS** ; **IVAN KRASIN** ; **JORDI PONT-TUSET** ; **SHAHAB KAMALI** ; **STEFAN POPOV** ; **MATTEO MALLOCI** ; **ALEXANDER KOLESNIKOV**. The Open Images Dataset V4: Unified image classification, object detection, and visual relationship detection at scale. *arXiv:1811.00982v2*, May 2020, https://arxiv.org/pdf/1811.00982.pdf
- **LAN J. GOODFELLOW** ; **JONATHON SHLENS** ; **CHRISTIAN SZEGEDY**. Explaining and Harnessing Adversarial Examples. *arXiv:1412.6572*, May 2020, https://arxiv.org/pdf/1412.6572.pdf